# EUROPÄISCHE PATENTSCHRIFT

(11) **EP 0 421 917 B1**
(45) Veröffentlichungstag und Bekanntmachung des Hinweises auf die Patenterteilung: **06.10.1993**
(21) Anmeldenummer: 90810631.3
(22) Anmeldetag: 21.08.1990
(51) Int. Cl.: B23Q 1/16, B23C 3/12

(54) **Fräsvorrichtung zum Entgraten**
Deburring milling device
Fraise pour enlever les bavures

(30) Priorität: 04.09.1989 DE 3929311
(43) Veröffentlichungstag der Anmeldung: 10.04.1991
(73) Patentinhaber: HILTI Aktiengesellschaft, 9494 Schaan (LI)
(72) Erfinder: Neyer, Werner, A-6714 Nüziders (AT)
(74) Vertreter: Wildi, Roland

(56) Entgegenhaltungen:
- EP-A- 0 269 789
- EP-A- 0 352 653
- CA-A- 1 158 084
- FR-A- 1 536 435
- FR-A- 2 565 875
- JP-A-60 131 106
- JP-A-64 002 811
- US-A- 4 627 169

## Beschreibung

Die Erfindung betrifft eine Fräsvorrichtung, insbesondere zum Entgraten von Werkstücken, mit einer gegen die Rückstellkraft von wenigstens zwei einander diametral gegenüberliegend angeordneten, Kolben enthaltenden Pneumatikzylindern gegenüber einem Gehäuse schwenkbar gelagerten, eine Frässpindel zur Aufnahme eines Werkzeuges aufweisenden Antriebseinheit, wobei die Antriebseinheit im axialen Abstand vom Werkzeug gegenüber dem Gehäuse in allen Winkelrichtungen eines in einer Normalebene zur Achse der Frässpindel liegenden Winkelkreises schwenkbar gelagert ist und für die schwenkbare Lagerung zwischen Antriebseinheit und Gehäuse ein kardanisches Gelenk vorgesehen ist.

Zum Entfernen von insbesondere bei spanabhebender Bearbeitung entstehenden Graten sowie zum Brechen von scharfen Kanten werden unter anderem Fräswerkzeuge eingesetzt, die den zu bearbeitenden Kanten entlang geführt werden. Um sich der zu bearbeitenden Kontur anpassen zu können, werden die Werkzeuge nicht starr geführt, sondern beweglich gelagert.

Bei einer bekannten Lösung entsprechend EP-A-0 269 789, ist die Antriebseinheit über Federn im Gehäuse abgestützt. Die Federn weisen eine bestimmte Vorspannung auf. Diese Vorspannung und damit die minimale Anpresskraft des Werkzeuges am Werkstück sind zwar einstellbar. Ein Verstellen dieser Anpresskraft während des Betriebes ist jedoch nicht möglich.

Bei einer weiteren bekannten Lösung ist die Antriebseinheit um eine senkrecht zur Achse der Frässpindel verlaufende Achse schwenkbar gelagert. Die Antriebseinheit ist über wenigstens einen Pneumatikzylinder am Gehäuse abgestützt. Der Betriebsdruck des Pneumatikzylinders und damit die Anpresskraft des Werkzeuges können während des Betriebes verändert werden. Da die Antriebseinheit jedoch nur um eine Achse schwenkbar gelagert ist, kann die Anpresskraft nur in einer bestimmten Richtung wirken. Zum Entgraten von umlaufenden Konturen muss daher die gesamte Antriebseinheit um eine zusätzliche Achse geschwenkt werden können. Dies ist sehr aufwendig und erschwert insbesondere eine Programmierung des Bewegungsablaufes.

Aus der JP-A-60 131 106 ist eine Vorrichtung bekannt, bei welcher eine Arbeitseinheit mit Frässpindel über ein kardanisches Gelenk gegenüber einem Gehäuse schwenkbar gelagert ist. Der Rückstellung der Antriebseinheit dienen Pneumatikzylinder mit einer senkrecht zur Achse der Antriebseinheit verlaufenden Kraftrichtung. Damit ist die Auslenkkraft sowie die Rückstellkraft direkt von der von den Pneumatikzylindern aufgebrachten Kraft abhängig, was eine aufwendige Steuerung für die Druckregulierung bedarf. Die damit nicht zu vermeidende Störanfälligkeit führt zu Ungenauigkeiten bei der Bearbeitung der Werkstücke.

Der Erfindung liegt die Aufgabe zugrunde, eine Fräsvorrichtung zu schaffen, die eine wirtschaftliche und zu hoher Genauigkeit führende Anpassung der Anpresskraft an unterschiedliche Konturen der zu bearbeitenden Werkstücke ermöglicht.

Gemäss Erfindung wird dies dadurch erreicht, dass die Rückstellkraft der Pneumatikzylinder parallel zur Achse der Frässpindel verläuft, wobei der Kolben bei wenigstens einem der Pneumatikzylinder als Kugel ausgebildet ist, der neben der Zentrierfunktion zusätzlich eine Abdichtfunktion zukommt und der Kontaktbereich der Antriebseinheit mit der Kugel korrespondierende, sich in Richtung parallel zur Achse der Frässpindel verjüngende Konturen aufweisen.

Die parallel zur Achse der Frässpindel, verlaufende Rückstellkraft der Pneumatikzylinder kann beispielsweise dadurch erreicht werden, dass die Pneumatikzylinder parallel zur Achse der Frässpindel angeordnet werden. Eine solche Anordnung ermöglicht eine kompakte Bauweise.

Zweckmässigerweise sind wenigstens zwei einander diametral gegenüberliegend angeordnete Pneumatikzylinder vorgesehen. Durch die einander diametral gegenüberliegende Anordnung der Pneumatikzylinder heben sich die von den Pneumatikzylindern auf die Antriebseinheit ausgeübten Kippmomente gegenseitig auf. Es können auch mehr als zwei Pneumatikzylinder vorgesehen werden. In diesem Fall sind diese gleichmässig über den Umfang verteilt anzuordnen. Die Praxis hat jedoch gezeigt, dass zwei Pneumatikzylinder für die Funktion vollständig genügen.

Zwischen wenigstens einem der Pneumatikzylinder und der Antriebseinheit weisen die Kontaktbereiche von Pneumatikzylinder und Antriebseinheit vorteilhaft korrespondierende, sich in Richtung parallel zur Achse der Frässpindel verjüngende Konturen auf. Die korrespondierenden, sich verjüngenden Konturen im Kontaktbereich zwischen Pneumatikzylinder und Antriebseinheit greifen ineinander und ergeben eine Zentrierwirkung. Diese Zentrierwirkung ist proportional zur Rückstellkraft des Pneumatikzylinders und bewirkt bei einem Auslenken der Antriebseinheit eine Rückstellung in die Ausgangslage.

Zweckmässigerweise ist der Kontaktbereich des Pneumatikzylinders kugelförmig und der Kontaktbereich der Antriebseinheit kugelpfannenförmig ausgebildet. Die Kontaktbereiche des Pneumatikzylinders und der Antriebseinheit bilden somit eine Art Kugelraste, welche bei Auslenkung der Antriebseinheit in beliebiger Richtung eine Rückstellung in die Ausgangslage bewirkt. Der Kontaktbereich der Antriebseinheit kann auch als einfache, gegenüber dem Durchmesser der Kugel im Durchmesser reduzierte Bohrung ausgebildet werden.

Die Erfindung soll nachstehend, anhand der sie beispielsweise wiedergebenden Zeichnungen, näher erläutert werden. Es zeigen:
- Fig. 1: eine erfindungsgemässe Fräsvorrichtung, im Längsschnitt, entlang der der Linie I-I in Fig. 2;
- Fig. 2: einen Querschnitt durch die in Fig. 1 dargestellte Fräsvorrichtung, entlang der Linie II-II.

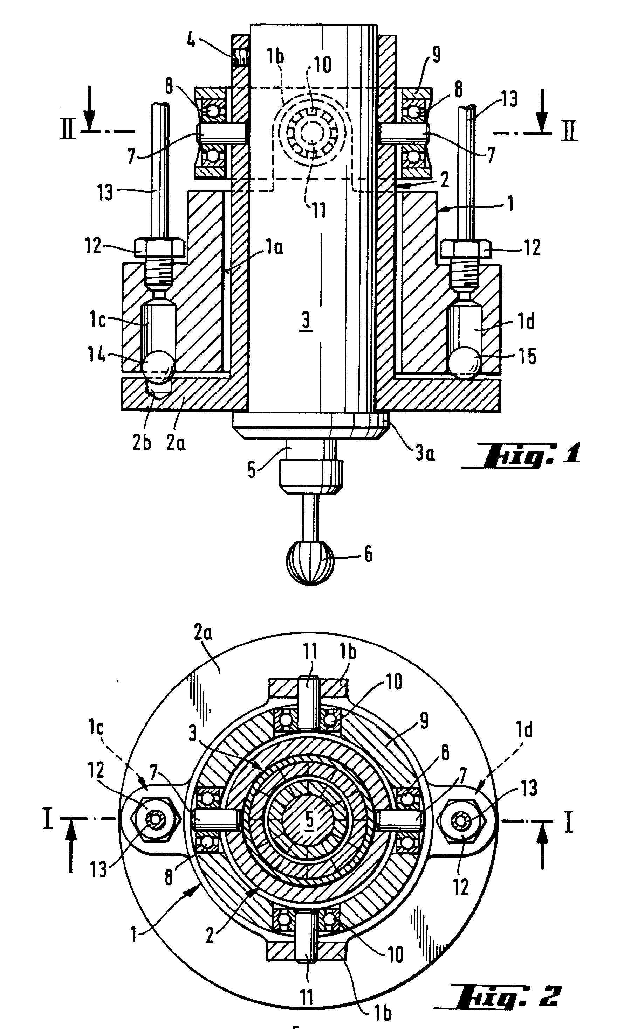

Die aus Fig. 1 und 2 ersichtliche Fräsvorrichtung weist ein Gehäuse 1 mit einer zentralen Bohrung 1a auf. In der Bohrung 1a ist eine Führungsbüchse 2 angeordnet. Die Führungsbüchse 2 weist gegenüber der Bohrung 1a radiales Spiel auf. Die Führungsbüchse 2 dient der Aufnahme einer Antriebseinheit 3. Die Antriebseinheit 3 weist einen als axialer Anschlag dienenden Bund 3a auf und wird in der Führungsbüchse 2 durch einen Gewindestift 4 gesichert. Die Antriebseinheit 3 weist eine Frässpindel 5 zur Aufnahme eines Werkzeuges 6 auf. Die Antriebseinheit 3 ist über Stifte 7 und Wälzlager 8 in einem Ring 9 schwenkbar gelagert. Der Ring 9 ist seinerseits über Wälzlager 10 und Stifte 11 an Trägern 1b des Gehäuses 1 schwenkbar gelagert. Die Führungsbüchse 2 und damit die darin gelagerte Antriebseinheit 3 sind somit gegenüber dem Gehäuse 1 um zwei zueinander senkrecht stehende Achsen schwenkbar.

Diese Art der Lagerung wird auch als kardanisches Gelenk bezeichnet und ist beispielsweise von der Aufhängung von Schiffskompassen her bekannt. Das Werkzeug 6 ist somit in allen Winkelrichtungen eines einer Normalebene zur Achse der Frässpindel 5 liegenden Winkelkreises schwenkbar. Diese Schwenkbarkeit ist begrenzt durch das zwischen der Bohrung 1a des Gehäuses und der Führungsbüchse 2 bestehende radiale Spiel. Die Antriebseinheit 3 ist also ähnlich einem sogenannten Fadenpendel im Gehäuse 1 gelagert.

Zur Zentrierung der Führungsbüchse 2 gegenüber dem Gehäuse 1 sind seitlich am Gehäuse 1 zwei Pneumatikzylinder 1c, 1d angeordnet. Die Pneumatikzylinder 1c, 1d stehen über Anschlussnippel 12 und Zuführleitungen 13 in Verbindung mit einem Druckluftversorgungssystem. In den Pneumatikzylindern 1c, 1d sind als Kolben wirkende Kugeln 14, 15 angeordnet. Die Kugeln 14, 15 stützen sich in axialer Richtung an einem Flansch 2a der Führungsbüchse 2 ab. Die Kugel 14 ist in eine Rastbohrung 2b eingerastet und dient somit der Zentrierung der Führungsbüchse 2 sowie der darin angeordneten Antriebseinheit 3.

Bei radialer Belastung am Werkzeug 6 kann die Antriebseinheit 3 um das kardanische Gelenk verschwenkt werden. Dabei rückt die Kugel 14 etwas aus der Rastbohrung 2b aus und drückt einseitig auf die Kante der Rastbohrung 2b. Die parallel zur Achse der Frässpindel 5 wirkende Rückstellkraft des Pneumatikzylinders 1c bewirkt somit eine Komponente in der dem Auslenken des Werkzeuges 6 entgegengesetzten Richtung. Die Führungsbüchse 2 wird somit beim Auslenken in beliebiger Richtung durch die Kugel 14 in die zentrale Lage zurückbewegt, wobei die Grösse dieser Rückstellkraft vom Druck im Pneumatikzylinder 1c abhängig ist.

Der Pneumatikzylinder 1d hat keine Rückstellfunktion und dient lediglich dem Kraftausgleich. Da beide Pneumatikzylinder 1c, 1d immer vom selben Druck beaufschlagt werden, sind auch die parallel zur Achse der Frässpindel 5 wirkenden Kräfte immer gleich gross. Da die Pneumatikzylinder 1c, 1d einander diametral gegenüberliegend und auf demselben Radius angeordnet sind, sind auch die von den Pneumatikzylindern 1c, 1d auf die Führungsbüchse 2 und damit auf die Antriebseinheit 3 ausgeübten Kippmomente gleich gross und heben sich gegenseitig auf. Die Führungsbüchse 2 befindet sich also in nicht ausgelenktem Zustand im Gleichgewicht. Sollte der normale Betriebsdruck der Pneumatikzylinder 1c, 1d zur Rückstellung der Antriebseinheit 3 in die Ausgangslage nicht ausreichen, so kann der normalerweise etwa 0,3 bis 0,5 bar betragende Betriebsdruck kurzzeitig bis auf etwa 6 bar erhöht werden.

## Patentansprüche

1. Fräsvorrichtung, insbesondere zum Entgraten von Werkstücken, mit einer gegen die Rückstellkraft von wenigstens zwei einander diametral gegenüberliegend angeordneten, Kolben enthaltenden Pneumatikzylindern (1c, 1d) gegenüber einem Gehäuse (1) schwenkbar gelagerten, eine Frässpindel (5) zur Aufnahme eines Werkzeuges (6) aufweisenden Antriebseinheit (3), wobei die Antriebseinheit (3) im axialen Abstand vom Werkzeug (6) gegenüber dem Gehäuse (1) in allen Winkelrichtungen eines in einer Normalebene zur Achse der Frässpindel (5) liegenden Winkelkreises schwenkbar gelagert ist und für die schwenkbare Lagerung zwischen Antriebseinheit (3) und Gehäuse (1) ein kardanisches Gelenk vorgesehen ist, **dadurch gekennzeichnet,** dass die Rückstellkraft der Pneumatikzylinder (lc, ld) parallel zur Achse der Frässpindel verläuft, wobei der Kolben bei wenigstens einem der Pneumatikzylinder (lc) als Kugel (14) ausgebildet ist, der neben der Zentrierfunktion zusätzlich eine Abdichtfunktion zukommt und der Kontaktbereich der Antriebseinheit (3) mit der Kugel (14) korrespondierende, sich in Richtung parallel zur Achse der Frässpindel (5) verjüngende Konturen aufweisen.

2. Vorrichtung nach Anspruch 1, dadurch gekennzeichnet, dass der Kontaktbereich der Antriebseinheit (3) kugelpfannenförmig ausgebildet ist.

## Claims

1. Milling device, particularly for deburring workpieces, comprising a drive unit (3) having a milling spindle (5) for receiving a tool (6), which spindle is mounted to be pivotable relative to a housing (1) against the return force of at least two diametrally oppositely arranged pneumatic cylinders (1c, 1d) with cylinders, wherein the drive unit (3) is mounted at an axial distance from the tool (6) relative to the housing (1) so as to be pivotable in all angular directions of an angular circle positioned in a normal plane relative to the axis of the milling spindle (5), and a cardanic hinge is provided for pivotable mounting between drive unit (3) and housing (1), **characterised in** **that** the return force of the pneumatic cylinders (1c, 1d) extends parallel with the milling-spindle axis, wherein the piston of at least one of the pneumatic cylinders (1c is structured as a ball (14) which, apart from its centring function, additionally serves a sealing function, and the contact area of the drive unit (3) comprises contours which correspond with the ball (14) and which narrow in the direction parallel with the axis of the milling spindle (5).

2. Device according to claim 1, **characterised in** **that** the contact area of the drive unit (3) is in the shape of a ball socket.

## Revendications

1. Dispositif de fraisage, en particulier pour enlever les bavures des pièces usinées, comprenant une unité d'entraînement (3) montée de manière à pouvoir pivoter par rapport à un carter (1), contre la force de rappel d'au moins deux vérins pneumatiques (1c, 1d) diamétralement opposés et contenant des pistons, et munie d'une broche porte-fraise (5) pour la fixation d'un outil (6), l'unité d'entraînement (3) étant montée à distance de l'outil (6) de manière à pouvoir pivoter par rapport au carter (1) dans toutes les directions angulaires d'un cercle d'angles situé dans un plan perpendiculaire à l'axe de la broche porte-fraise (5) et un joint universel étant prévu pour la fixation pivotante entre l'unité d'entraînement (3) et le carter (1) , **caractérisé en ce** que la force de rappel des vérins pneumatiques (1c, 1d) est orientée parallèlement à l'axe de la broche porte-fraise, le piston d'au moins l'un des vérins pneumatiques (1c) étant conformé en bille (14) laquelle assume, en plus de la fonction de centrage, une fonction d'étanchéité , et la zone de contact entre l'unité d'entraînement (3) et la bille (14) présentant des contours correspondants qui se rétrécissent parallèlement à l'axe de la broche porte-fraise (5).

2. Dispositif de fraisage selon la revendication 1, caractérisé en ce que la zone de contact de l'unité d'entraînement (3) est conformée en coussinet sphérique.
